Europäisches Patentamt

European Patent Office

Office européen des brevets

(19)

(11) Numéro de publication: **0 080 929**
**B1**

(12) **FASCICULE DE BREVET EUROPEEN**

(45) Date de publication du fascicule du brevet:
05.02.86

(51) Int. Cl.⁴: **B 01 D 53/36**, B 01 J 37/02

(21) Numéro de dépôt: **82402128.1**

(22) Date de dépôt: **23.11.82**

(54) **Procédé de traitement de gaz d'échappement des moteurs à combustion interne fonctionnant avec un carburant contenant du plomb.**

(30) Priorité: **27.11.81 FR 8122220**

(43) Date de publication de la demande:
**08.06.83 Bulletin 83/23**

(45) Mention de la délivrance du brevet:
**05.02.86 Bulletin 86/6**

(84) Etats contractants désignés:
**BE CH DE FR GB IT LI NL**

(56) Documents cités:
**FR - A - 1 564 259**
**FR - A - 2 179 984**
**US - A - 4 132 668**
**US - A - 4 176 091**

(73) Titulaire: **Société Française des Produits pour Catalyse "PRO-CATALYSE", 1-4, avenue de Bois Préau, F-92500 Rueil Malmaison (FR)**

(72) Inventeur: **Prigent, Michel, 11, rue des Marronniers, F-92500 Rueil Malmaison (FR)**
Inventeur: **Sugier, André, 34 Avenue de la Châtaigneraie, F-92500 Rueil Malmaison (FR)**
Inventeur: **Blanchard, Gilbert, 5 Allée des Acacias Lagny le Sec, F-60330 Le Plessis Belleville (FR)**
Inventeur: **Brunelle, Jean-Pierre, Résidence Fontaine St. Martin rue de la Planchette, F-95350 Saint-Brice-Sous-Foret (FR)**

(74) Mandataire: **Savina, Jacques, RHONE-POULENC RECHERCHES Service Brevets Chimie et Polymères 25, quai Paul Doumer, F-92408 Courbevoie Cédex (FR)**

## Description

La présente invention concerne un procédé de traitement de gaz d'échappement des moteurs à combustion interne fonctionnant avec un carburant contenant du plomb.

Plus particulièrement elle se rapporte à des catalyseurs permettant de traiter les gaz d'échappement ayant une bonne activité catalytique et une stabilité suffisante lorsque les moteurs à combustion interne fonctionnent avec un carburant contenant du plomb.

Ces catalyseurs présentent en particulier, une bonne résistance a l'empoisonnement au plomb, au molybdène, au calcium, au magnésium, au phosphore, au zinc, au bore, aux halogènes, aux sulfates ainsi qu'aux dérivés, complexes, sels, oxydes dans lesquels ces composés peuvent être engagés. La protection des catalyseurs contre l'empoisonnement par le plomb est concernée particulièrement.

Il est en effet, déjà connu que l'addition de plomb tétraéthyle ou tétraméthyle à l'essence permet de dininuer la détonation et d'augmenter l'indice d'octane.

L'addition de plomb à l'essence a par contre un effet néfaste, d'une part en provoquant des dépôts contenant du plomb dans les chambres de combustion, d'autre part en empoisonnant et en fragilisant les catalyseurs situés dans les pots d'échappement.

Afin d'éviter le dépôt de dérivés du plomb peu volatila dans les chambres de combustion des moteurs, il est ajouté des halogénures d'alcane qui donnent avec le plomb des halogènures de plomb volatils, qui accroissent l'empoisonnement des catalyseurs mis en oeuvre dans les pots d'échappement.

L'épuration des gaz d'échappement issus de moteurs utilisant de l'essence contenant du plomb provoque au niveau du catalyseur un affaiblissement de sa résistance mécanique et de son activite. Cet affaiblissement s'accroit avec la durée d'utilisation du catalyseur qui rapidement ne permet plus de répondre aux normes antipollution prèvues. La prolongation de la vie des catalyseurs de post-combustion a toujours été un problème industriel mais qui devient de plus en plus important surtout face à l'augmentation des devient de plus en plus important surtout face à l'augmentation des exigences nationales et internationales en faveur de l'environnement.

Depuis déjà longtemps des solutions partielles ont été trouvées mais elles se révèlent largement insuffisantes à l'heure actuelle.

Il est déjà connu d'après le brevet belge n° 862 719 d'améliorer la résistance au plomb des catalyseurs d'oxydo-réduction par addition à la surface du catalyseur, d'une alumine catalytiquement active en mélange avec de l'oxyde de cérium.

De tels catalyseurs présentent une statilité au cours du temps insuffisante pour pouvoir répondre aux exigences de la lutte antipollution dans des pays où l'essence sans plomb n'est pas disponible.

La Demanderesse a trouvé un nouveau procédé de traitement de gaz d'échappement des moteurs à combustion interne fonctionnant avec un carburant contenant du plomb au moyen d'un catalyseur comportant une phase active déposée sur un support, caractérisé en ce que l'on utilise un catalyseur dont le support est constitué d'un oxyde réfractaire auquel est incorporée de la silice et dont la phase active est constituée par du platine et/ou de l'iridium.

Le support sur lequel est déposée la phase catalytiquement active est constitué d'un oxyde réfractaire.

Ces supports peuvent se présenter de deux façons, soit à l'état de corps façonnés sous formes diverses telles que billes, extrudés..., soit sous forme d'une pellicule ou d'un revêtement applique sur un substrat monolithique.

Tous ces supports doivent présenter de préférence une surface spécifique comprise entre 25 et 250 m2/g et, plus particulièrement comprise entre 70 et 150 m2/g, un volume poreux total de préférence compris entre 0,35 et 2,2 cm3/g et, plus particulièrement compris entre 0,5 et 1,5cm3/g, une macroporosité telle que le volume poreux des pores dont le diamètre est supérieur à 100 µm (1000 Å) est compris entre environ 0,05 et 0,9 cm3/g et, de préférence, entre 0,2 et 0,5 cm3/g.

Lorsque l'on met en oeuvre selon l'invention des supports sous forme de corps façonnés, l'oxyde réfractaire peut être choisi notamment parmi l'alumine, les oxydes mixtes comprenant par exemple, de l'alumme associée avec de l'oxyde de zirconium, des oxydes de terre rares et/ou de l'oxyde de titane.

On utilise de préférence des supports constitués d'alumine.

Ces supports peuvent notamment avoir été fabriqués à partir de l'alumine active obtenue selon le procédé décrit dans le brevet américain n° 2 915 365 et agglomérée selon le procédé décrit dans le brevet américain n° 2 881 051.

Ils peuvent également avoir été fabriqués par autoclavage en milieu neutre ou acide des agglomérés précédents, séchage et calcination notamment, tel que decrit dans les brevets français n° 1 449 004 et 1 386 364.

Les supports mis en oeuvre peuvent également avoir été obtenus selon le procédé décrit par le brevet français n° 2 399 276 (n° de dépôt 77.23880).

Les supports à base d'alumine mis en oeuvre peuvent également avoir été fabriqués selon le procédé décrit dans la demande de brevet européen n° 15 801 au nom de Rhône-Poulenc Industries.

D'une manière générale, les supports sous forme de corps façonnes mis en oeuvre selon l'invention peuvent avoir été traités ainsi qu'il est bien connu de l'homme de l'art, par des agents porogènes tels que ceux à base de cellulose, naphtaline, gommes naturelles, polymères synthétiques, etc... afin de leur conférer les propriétés de porosite desirée.

Lorsque l'on met en oeuvre selon l'invention des supports sous forme d'une pellicule ou d'un revêtement appliqué sur un substrat métallique ou ceramique, lesdits substrats ont de préférence une structure présentant des canaux ou conduits de formes diverses favorisant l'écoulement des gaz.

De tels substrats sont inertes du point de vue catalytique mais permettent d'apporter à l'ensemble catalytique une tenue mécanique et une bonne surface de contact et d'échange entre les gaz et le catalyseur. En effet, les oxydes réfractaires constituent le revetement de ces substrats sous forme de fines pellicules et par là même, représentent une partie pondérale infime de l'ensemble catalytique. Ces oxydes réfractaires constituant le revêtement ou le support sont notamment choisis parmi le groupe comprenant : les oxydes d'aluminium, magnésium, calcium, strontium, baryum, scandium, yttrium, lanthanides, gallium, fer, cerium, titane, zirconium, hafnium, thorium, nobium, tantale, chrome, et tungstène.

On utilise de préférence un revêtement en oxyde d'aluminium.

Les substrats catalytiquement inertes sont choisis parmi les substrats métalliques tels que ceux obtenus à partir d'alliages de fer, de chrome et/ou nickel ou ceux obtenus à partir de fer, de chrome, aluminium et cobalt tels que ceux connus sous la marque Kanthal ou ceux obtenua à partir d'alliages de fer, de chrome, d'aluminium et d'yttrium et connus sous la marque Pecralloy. Le métal peut aussi être de l'acier carboné ou de la fonte simple.

On peut avantageusement prétraiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium.

Les substrats en matière céramique utilisés sont notamment ceux comportant comme matière principale : la cordiérite, l'alumine, la mullite, la zircone, la zirconmullite, le titanate de baryum, la porcelaine, l'oxyde de thorium, l'oxyde de magnésium, la stéatite, les carbures de bore.

On peut obtenir le revêtement en oxyde d'aluminium de ces substrats céramiques ou métalliques par application d'hydrate d'alumine puis calcination ou par dépôt d'un sel d'aluminium puis calcination ou par application d'une couche d'alumine active puis calcination.

Lorsque l'oxyde réfractaire est de l'oxyde d'aluminium, le revêtement peut également être fabriqué selon le procédé décrit dans la demande de brevet n°81.16352 au nom de Rhône-Poulenc Industries, à partir d'une composition aqueuse d'alumine comportant un liant qui constitue essentiellement la partie dispersée et une charge qui constitue essentiellement la partie non dispersée de la composition, caractérisée en ce que le taux de dispersion dans l'eau de la composition est compris entre 10 et 60 %, la granulométrie de la partie non dispersée de la composition est telle que le diamètre moyen des particules d'alumine qui la constituent est compris entre 1 et 15 microns, au moins 70 % de ces particules ayant un diamètre compris entre la moitié du diamètre moyen et le double du diamètre moyen.

Le liant d'alumine mis en oeuvre est choisi parmi le groupe comportant les suspensions ou dispersions aqueuses de boehmites fines ou ultrafines, de pseudo-boehmites, de gels d'alumine amorphe, de gels d'hydroxyde d'aluminium ou d'hydrargillite ultra-fine.

La charge est choisie parmi le groupe comportant l'hydrargillite, la bayerite, la boehmite, la pseudo-boehmite, les gels d'alumine amorphe ou essentiellement amorphe, les composés constitués d'alumine de transition qui comportent au moins une des phases prises dans le groupe constitué par rhô, chi, êta, gamma, kappa, thêta, delta, alpha.

Le revêtement est déposé par immersion du substrat céramique ou métallique dans la composition, de façon à remplir tous les canaux de celui-ci, on peut également opérer par écoulement de la composition à travers les canaux du substrat; l'on opère un égouttage partiel puis un drainage des canaux du substrat, au moyen par exemple d'un courant d'air comprimé ; l'on coagule la composition par effet thermique ou chimique ; l'on sèche si nécessaire à une température inférieure à 300°C puis on calcine le substrat revêtu de la composition à une température comprise entre 300°C et 1100°C.

Selon l'invention, le procédé de traitement de gaz d'échappement des moteurs à combustion interne fonctionnant avec un carburant contenant du plomb, au moyen d'un ensemble catalytique comportant une phase active déposée sur un support, à l'état façonné ou monolithique, présemte ume stabilité catalytique améliorée par incorporation de silice au support d'oxyde réfractaire.

L'incorporation de la silice au sein du support peut se faire soit directement par de la silice soit par l'intermédiaire d'un précurseur de la silice qui est transformé en silice lors de la calcination.

Le précurseur de la silice peut être minéral ou organique. Il peut être notamment choisi parmi le groupe suivant : silicate d'éthyle, acide silicique, silicate de sodium, tétraméthylsilane, méthyltriéthoxysilane, éthyltriméthoxysilane, triéthylsilicol. L'introduction de la silice peut se faire à la surface du support par imprégnation ou dans la totalité de la masse d'oxyde réfractaire au niveau de sa fabrication. Selon le procédé de l'invention, on préfère introduire la silice par imprégnation.

Généralement, le rapport pondéral quantité de silice par rapport à la quantité d'oxyde réfractaire est beaucoup plus faible dans le cas d'une imprégnation que dans le cas d'une introduction dans la masse. La quantité de silice introduite peut varier dans de larges limites de 0,05 à 30 % exprimé en quantité de silice/oxyde réfractaire avec de préférence, un domaine de variation entre 0,5 et 10 %.

Lorsque l'on met en oeuvre selon l'invention des supports sous forme de corps façonnés tels que billes, extrudés, on peut opérer l'introduction de la silice au sein du support par imprégnation.

L'imprégnation peut alors être effectuée à l'aide d'un précurseur de la silice mis en solution dans l'eau ou dans un solvant organique. Il est préférable d'utiliser le silicate d'éthyle en solution alcoolique. Après imprégnation du support, celui-ci est ensuite séché à une température comprise entre 100°C et 300°C dans un courant d'azote puis calciné à l'air à une température d'au moins 300°C et de préférence comprise entre environ 300°C et 900°C pendant 1 à 24 heures.

L'introduction de l'agent catalytiquement actif défini ci-après peut être réalisée postérieurement à l'imprégnation ou préalablement à celle-ci.

L'incorporation de la silice peut se faire dans la totalité de la masse des corps façonnés à base d'oxyde réfractaire. Lorsque l'on met en oeuvre selon l'invention des corps façonnés sous forme de billes on peut notamment introduire la silice selon le procédé décrit dans la demande de brevet européen n° 15801 au nom de RhônePoulenc Industries en remplaçant le sel de boehmite ultrafine ou de pseudoboehmite par un sol de silice ou de préférence par un sol de silice-oxyde réfractaire. Selon ce procédé on mélange à un pH inférieur à 7,5 et de préférence compris entre 4 et 7 d'une part un sol de silicé ou de préférence un sol mixte silice-oxyde réfractaire la concentration en poids du sol exprimée en métaux étant comprise entre 5 et 25 % et d'autre part, des particules sphéroïdales d'oxyde réfractaire.

L'agent catalytiquement actif peut ensuite être introduit par imprégnation du support.

Lorsqu'on met en oeuvre selon l'invention des supports sous forme d'une pellicule appliquée sur un substrat, on peut opérer l'introduction de la silice soit par imprégnation, soit lors de la fabrication du revêtement.

Lorsqu'on opère l'introduction de la silice par imprégnation, le substrat doit être préalablement recouvert d'une pellicule d'oxyde réfractaire selon l'un des procédés décrit préalablement.

L'imprégnation peut alors être effectuée à l'aide d'un précurseur de la silice. Le support imprégné est ensuite séché et calciné. L'introduction de la phase catalytiquement active peut être réalisée postérieurement ou antérieurement à l'introduction de la silice.

Selon un mode de réalisation préférentiel, lorsqu'on opère l'incorporation de la silice lors de la fabrication du revêtement, on utilise un substrat à l'état métallique ou céramique. Le revêtement est réalisé selon le procédé décrit dans la demande de brevet français n°81.16352 au nom de Rhône-Poulenc Industries en utilisant un liant et une charge à base de silice ou d'oxyde réfractaire. Dans ce cas la phase catalytiquement active est introduite par la suite, par imprégnation.

Le support chargé en silice et en phase catalytiquement active est séché et active par chauffage à une température comprise entre environ 100°C et 500°C.

La phase catalytiquement active est constituée par au moins un métal précieux choisi parmi le groupe constitué par l'iridium et le platine. Les quantités mises en oeuvre sont généralement inférieures à 5 % en poids de l'ensemble catalytique (comprenant le support plus le substrat) et comprises entre 0,005 et 1 % et plus particulièrement entre 0,05 et 0,5 %.

Le platine et/ou l'iridium peuvent se trouver à l'état libre, à l'état combine dans des oxydes, des alliages ou à l'état associé avec d'autres métaux précieux ou des métaux choisis parmi les groupes II à VIII de la classification périodique. Ces métaux sont choisis notamment parmi le calcium, le magnésium, le strontium, le fer, le nickel, le cobalt, le chrome, le vanadium, le molybdène, le tungstène, le cuivre, le zinc, le cérium, le manganèse, le lanthane etc.....Les quantités du ou des constituants métalliques associés à l'iridium et/ou platine varient dans de larges limites suivant la nature du métal mis en oeuvre. Elles sont généralement d'au moins 0,001 % en poids de l'ensemble catalytique (comprenant le support plus le substrat) et peuvent atteindre 20 % mais sont de préférence, comprises entre 0,01 % et 12 %.

On opère de préférence par imprégnation du support au moyen de solution de composés minéraux ou organiques des métaux précieux que l'on désire introduire.

Les composés minéraux ou organiques des métaux précieux sont notamment choisis parmi l'acide chloroplatinique, l'acide bromoplatinique, l'acide chloroiridique, le chlorure de platine tétramine, l'acétylacétonate de platine.

La profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique et oxalique.

Lorsqu'on met en oeuvre selon l'invention des supports sous forme de monolithes, l'imprégnation par les métaux précieux (platine et iridium) peut être réalisée par immersion du support dans lequel on a déjà introduit la silice dans une solution de composés minéraux ou organiques des métaux précieux.

Selon un mode de mise en oeuvre préféré de l'invention, on réalise l'introduction des métaux précieux préalablement à l'introduction de la silice.

L'activation du catalyseur peut être avantageusement réalisée en atmosphère réductrice à une température généralement comprise entre environ 100 et 500°C, on peut par exemple utiliser comme agents réducteurs l'hydrogène, l'oxyde de carbone et/ou l'hydrogène sulfuré.

On a constaté que les catalyseurs selon l'invention permettent d'éliminer très efficacement la majeure partie de l'oxyde de carbone, des hydrocarbures imbrulés présents dans les gaz d'échappement des moteurs à combustion interne à allumage commandé et que, de plus, ils possédent une stabilité nettement améliorée au cours du temps par rapport aux catalyseurs de l'art antérieur.

Les exemples non limitatifs donnés ci-après illustrent l'invention et en particulier, les avantages des présents catalyseurs par rapport à ceux décrits dans l'art antérieur.

**Exemple 1:** Préparation d'un catalyseur (A) de l'art antérieur.

On prépare 1000 g de billes d'alumine de structure gamma selon les procédés décrits dans les brevets français n° 1 449 904 et 1 386 364 par autoclavage en présence d'acide d'agglomérés d'alumine active, séchage et calcination.

Les billes d'alumine présentent une surface spécifique de 100 m2/g, un volume poreux total de 0,90 cm3/g et un volume de 0,40 cm3/g constitué par des macropores ayant un diamàtre supérieur à 100 nm (1000 Å).

Ces billes sont imprégnées par 900 cm3 d'une solution aqueuse de chlorure de palladium contenant 1,8 g de palladium.

Après 30 minutes de contact, les billes sont séchées à 150°C puis activées à 400°C pendant 3 heures dans un courant d'hydrogène circulant à 200 litres par heure.

Le catalyseur (A) ainsi préparé contient en poids rapporté à l'ensemble catalytique 0,18 % de palladium.

**Exemple 2:** Préparation d'un catalyseur (B) de l'art antérieur.

On prépare 1000 g de billes d'alumine selon le procédé décrit dans la demande de brevet européen n° 15801.

Ces billes présentent une surface spécifique de 100 m2/g, un volume poreux total de 1,20 cm3/g et un volume de 0,45 cm3/g constitue par des macropores ayant un diamètre superieur à (100 nm Å).

Le mode opératoire utilisé pour l'imprégnation est semblable à celui décrit dans l'exemple 1 ci-dessus. On utilise cette fois 1200 cm3 d'une solution aqueuse de trichlorure de rhodium hydraté contenant 1,80 g de rhodium.

Le catalyseur (B) ainsi préparé contient en poids rapporté à l'ensemble catalytique 0,18 % de rhodium.

**Exemple 3:** Préparation d'un catalyseur (C) de l'art antérieur.

On prépare une suspension aqueuse d'alumine convenant au revêtement d'une structure monolithique en cordiérite. Le monolithe de 1,7 litres est plongé dans une suspension à pH 3,5 contenant 30 % en poids d'alumine. Le monolithe est égoutté et séché puis il est calciné à 600°C pendant 3 heures. Le monolithe ainsi revêtu est immergé pendant 30 minutes dans une solution aqueuse de chlorure de palladium et de rhodium hydraté, puis il est égoutté et séché à 150°C et activé à 400°C pendant 3 heures dans un courant d'hydrogène de 200 litres par heure.

Les concentrations en chlorure de palladium et en trichlorure de rhodium hydraté sont telles que, après immersion et activation le monolithe contient 1 g de palladium et 0,53 g de rhodium.

Le catalyseur (C) ainsi préparé contient en poids rapporté à l'ensemble catalytique 0,1 % de palladium et 0,055 % de rhodium.

**Exemple 4:** Préparation d'un catalyseur (D) de l'art antérieur.

On prépare 1000 g de billes d'alumine tel que décrit dans l'exemple 1. Ces billes sont imprégnées par 900 cm3 d'une solution aqueuse de nitrate céreux contenant 30 g de cérium.

Après 30 minutes de contact, les billes sont séchées à 150°C puis calcinées sous air à 400°C pendant 3 heures.

Elles sont ensuite imprégnées par 900 cm3 d'une solution d'acide chloroplatinique contenant 1,80 g de platine.

Après 30 minutes de contact, les billes sont séchées à 150°C puis activées à 400°C pendant 3 heures dans un courant d'hydrogène circulant à 200 litres par heure.

Le catalyseur (D) ainsi préparé contient en poids rapporté à l'ensemble catalytique 3 % de cérium; 0,18 % de platine.

**Exemple 5:** Préparation d'un catalyseur (E) de l'art antérieur contenant un alcalino-terreux.

Le présent exemple donné à titre comparatif illustre la préparation d'un catalyseur contenant un alcalino-terreux comme stabilisant thermique. Il est connu que les alcalino-terreux, comme la silice stabilisent l'alumine à la température. Un catalyseur contenant des alcalino-terreux s'avère par contre très peu stable quand il est utilisé pour traiter des gaz d'échappement des moteurs à combustion interne fonctionnant avec un carburant contenant du plomb. Il n'était donc pas évident pour l'homme de l'art que la silice qui était connue pour stabiliser l'alumine à la température pourrait aussi la stabiliser vis à vis d'agents tels que les dérivés du plomb.

1000 g de billes d'alumine tel que décrit dans l'exemple 2 sont imprégnées par 1200 cm3 d'une solution aqueuse de nitrate de baryum contenant 30 g de baryum.

Après 30 minutes de contact, les billes sont séchées à 150°C puis calcinées à 400°C pendant 3 heures.

Elles sont ensuite imprégnées par 1200 cm3 d'une solution d'acide chloroplatinique contenant 1,80 g de platine.

Après 30 minutes de contact, les billes sont séchées à 150°C puis activées à 400°C pemdant 3 heures dans un courant d'hydrogène circulant à 200 litres par heure.

Le catalyseur (E) ainsi préparé contient en poids rapporté à l'ensemble catalytique 3 % de baryum ; 0,18 % de platine.

**Exemple 6:** Préparation d'un catalyseur (F) selon l'invention.

On imprègne 1000 g de billes d'alumine tel que décrit dans l'exemple 1 par 900 cm3 d'une solution aqueuse d'acide hexachloroplatinique contenant 1,8 g de platine. Après 30 minutes de contact, les billes sont séchées à 150°C puis activées à 400°C pendant heures dans un courant d'hydrogène circulant à 200 litres par heure.

Les billes sont ensuite imprégmées par 900 cm3 de solution éthanolique de silicate d'éthyle contenant 25 g de silice (SiO$_2$).

Après 30 minutes de contact, les billes sont séchées à 120°C sous balayage d'azote pendamt 5 heures, puis on monte progressivement la température à 300°C sous balayage d'azote avant de calciner sous air à 400°C pendant 12 heures.

Le catalyseur (P) ainsi préparé contient 0,18 % en poids de platine rapporté à l'ensemble catalytique et 2,5 % en poids de silice rapporté à l'alumine.

**Exemple 7:** Préparation d'un catalyseur (G) selon l'invention.

On disperse dans l'eau 150 g d'un liant d'alumine contenant 25 % en poids de silice et présentant um taux de dispersion de 75 % puis on ajoute 300 g de charge d'alumine. Le taux de dispersion de la composition obtenue est de 25 %, la granulométrie de la partie non dispersée est telle que le diamètre moyen des particules qui la composént est de 7,2 μm, 81 %-des particules ayant un diamètre compris entre la moitié de ce diamètre moyen et le double du diamètre moyen.

On utilise un monolithe de 1,7 litres en cordiérite qui est plongé à pH 3,5 dans la suspension. Le support est ensuite égoutté, séché pour que les canaux de la structure en nids d'abeille soient vidés, puis il est calciné à 600°C pendant 3 heures. Le monolithe ainsi revêtu est immergé pendant 30 minutes dans 2,55 litres d'une solution aqueuse contenant 1,5 g de platine introduit sous la forme d'acide hexabromoplatinique puis il est égoutté et séché à 150°C et activé à 400°C pendant 3 heures dans un courant d'hydrogène de 200 litres par heure.

Le catalyseur (G) ainsi préparé contient en poids 9,1 % de silice (rapporté à l'alumine) et 0,20 % de platine rapporté à l'ensemble du catalyseur.

**Exemple 8:** Préparation d'un catalyseur (H) selon l'invention.

On plonge un monolithe en acier inoxydable ordinaire de 0,8 litre dans une suspension aqueuse d'alumine à pH 3,5 contenant 30 % en poids d'alumine.

Le support est égoutté, séché pour que les canaux soient vidés puis il est calciné à 600°C pendant 3 heures. L'épaisseur de la couche d'alumine déposée sur le monolithe est de 32 μm.

Le monolithe ainsi revêtu est imprégné pendant 30 minutes par une solution aqueuse contenant 1,0 g de plàtine et 0,5 g d'iridium.

Le catalyseur obtenu après activation à 400°C pendant 3 heures dans un courant d'hydrogène est ensuite imprégné par 2,5 litres de solution aqueuse d'acide silicique (contenant 2,46 g de silice) fraichement préparé par échange sur résine Duolite C 464 d'une solution de silicate de sodium.

Le catalyseur (H) ainsi préparé contient 0,1 % de platine et 0,05 % d'iridium rapportés à l'ensemble catalytique et 5,9 % de silice rapporté à l'alumine.

**Exemple 9:** Préparation d'un catalyseur (I) selon l'invention.

On prépare 1000 g de billes d'alumine stabilisées par 7,5 % de silice par coagglomération de boehmite et de silice selon le procédé décrit dans la demande de brevet européen n° 15801.

Ces billes sont imprégnées par 1200 cm3 d'une solution aqueuse d'acide chloroplatinique et d'acide chloroiridique contenant 1,2 g de platine et 0,6 g d'iridium. Après 30 minutes de contact les billes sont séchées à 150°C puis activées à 400°C pendant 3 heures dans un courant d'hydrogène circulant à 200 litres par heure. Le catalyseur (I) ainsi préparé contient 0,12 % de platine, 0,06 % d'iridium rapportés à l'ensemble catalytique et 7,5 % de silice rapportés au poids d'alumine.

**Exemple 10:** Préparation d'un catalyseur (J) selon l'invention

On prépara 1000 g de billes d'alumine tel que décrit dans l'exemple 1. Ces billes sont imprégnées avec 900 cm3 d'une solution aqueuse d'acide chloroiridique contenant 2,0 g d'iridium. Les billes sont séchées à 150°C puis imprégnées par 2500 cm3 d'une solution d'acide silicique contenant 5 g de silice. Après 30 minutes de contact les billes sont séchées à 120°C puis calcinées sous air à 400°C pendant 12 heures.

Le catalyseur (J) ainsi préparé contient 0,20 % d'iridium rapporté à l'ensemble catalytique, et 0,5 % de silice rapporté à l,alumine.

**Exemple 11:** Préparation d'un catalyseur (K) selon l'invention.

On prépare 1000 g de billes d'alumine stabilisées par 4 % de silice par coagglomération d'un sol de boehmite selon le procédé décrit dans la demande de brevet européen n° 15801. Ces billes d'alumine sont imprégnées par 1200 cm3 d'une solution aqueuse de nitrate ferrique et de mitrate céreux contenant 11 g de fer et 35 g de cérium. Après 30 minutes de contact, les billes sont séchées à 150°C puis calcinées sous air à 400°C pendant 3 heures. Elles sont ensuite imprégnées par 1200 cm3 d'une solution aqueuse d'acide chloroplatinique contenant 1,2 g de platine.

Après 30 minutes de contact, les billes sont séchées à 150°C puis activées à 400°C pendant 3 heures dans un courant d'hydrogène circulant à 200 litres par heure.

Le catalyseur (K) ainsi préparé contient 0,12 % de platine, 1,1 % de fer, 3,5 % de cérium rapportés à l'ensemble catalytique, et 4 % de silice rapporté au poids d'alumine.

**Exemple 12:** Propriétés mécaniques des catalyseurs décrits

précédemment dans les exemples 1 à 11.

Les essais comparatifs de fragilisation pour les composés du plomb sont déterminés sur les catalyseurs calcinés à 1000°C pendant 6 heures en l'absence de plomb ou après imprégnation par du nitrate de plomb.

Les propriétés mécaniques suivantes ont été déterminées:

- la résistance à l'attrition appelée AIF détermine la résistance mécanique aux chocs et aux frottements de l'échantillon que l'on soumet à une intense agitation dans les conditions suivantes:

. $P_1$ gramme d'échantillon (environ 10 g) sont placés dans un pot de 65 cm3 en acier inox;

. agitation du pot pendant 5 minutes par un appareil à secousses fourni par PROLABO sous le nom de microbroyeur DANGOUMAU (référence 7505);

. mesure de la quantité de produit non réduit en poussière : poids $P_2$.

La résistance à l'attrition est donnée par la formule :

$$\% \ AIF = \frac{P_2}{P_1} \ X \ 100$$

- Le résistance à l'écrasement grain à grain appelée EGG exprimée en kg représente la valeur moyenne d'écrasement de 20 billes de catalyseur conditionnées à 500°C pendant 1 heure. Les mesures sont effectuées sur un appareil à écrasement INSTRON modàle 1026 (vitesse de rapprochement des machoires 0,5 mm/min).

Les conditions de préparation des échantillons imprégnés du nitrate de plomb sont les suivantes :

.imprégnation de 100 g de catalyseur par une solution aqueuse de nitrate de plomb. Le volume d'imprégnation est de 90 cm3 pour les catalyseurs A, D, F, J, décrits dans les exemples 1,4,6,10, 120 cm3 pour les catalyseurs B,E,I,K, décrits dans les exemples 2,5,9,11.

Les quantités de nitrate de plomb imprégnées conduisent après calcination à des teneurs en oxyde de plomb (PbO) comprises entre 2 et 16 % en poids par rapport au catalyseur.

On opère le mûrissement du produit imprégné pendant 1 heure ; on le sèche à 120°C pendant 16 heures, puis on le calcine à 1000°C sous air pendant 6 heures.

Le tableau I ci-après rassemble les résultats des mesures de résistance à l'attrition et de résistance à l'écrasement.

TABLEAU I

0 080 929

| N° des exemples | Réf. du cata-lyseur | Résistance à l'attrition | | | | Résistance à l'écrasement | | | |
|---|---|---|---|---|---|---|---|---|---|
| | | catalyseur neuf | catalyseur calciné 1000°C 6 h | catalyseur imprégné de 2% de PbO calciné à 1000°C 6 h | catalyseur imprégné de 16% de PbO calciné à 1000°C 6 h | catalyseur neuf | catalyseur calciné à 1000°C 6 h | catalyseur imprégné de 2% de PbO 1000°C 6 h | catalyseur imprégné de 16% de PbO 1000°C 6 h |
| 1 | A | 99,5 | 99,3 | 97,6 | 85,2 | 5,5 | 4,8 | 3,5 | 2,7 |
| 2 | B | 99,7 | 96,1 | 91,2 | 25,6 | 3,7 | 2,9 | 2,1 | 0,8 |
| 4 | D | 99,2 | 98,6 | 97,3 | 85,0 | 5,0 | 4,8 | 4,6 | 2,4 |
| 5 | E | 99,7 | 95,8 | 90,7 | 47,2 | 3,5 | 3,1 | 3,0 | 1,2 |
| 6 | F | 99,7 | 99,5 | 99,4 | 97,3 | 6,1 | 5,4 | 5,0 | 4,7 |
| 9 | I | 99,4 | 99,4 | 98,6 | 96,5 | 3,4 | 3,4 | 3,4 | 3,1 |
| 10 | J | 99,5 | 99,3 | 98,5 | 95,5 | 6,1 | 5,2 | 4,7 | 4,3 |
| 11 | K | 99,9 | 99,8 | 99,3 | 97,8 | 3,4 | 3,4 | 3,2 | 2,8 |

ART ANTERIEUR (exemples 1, 2, 4, 5) — INVENTION (exemples 6, 9, 10, 11)

**Exemple 13:** Surface spécifique des catalyseurs tels quel et calcinés

à 1000°C en l'absence de plomb ou après imprégnation par du nitrate de plomb.

Le présent exemple rassemble les résultats (tableau iI) des surfaces spécifiques BET de tous les catalyseurs exemplifiés.

Les conditions de préparation des échantillons imprégnés par du nitrate de plomb sont celles décrites à l'exemple précédent.

Les échantillons (C), (G), (H) décrits dans les exemples (3), (7), (8) ont été décapés afin de séparer du substrat en forme de nid d'abeille le support et la phase catalytique composée des métaux précieux déposés sur alumine éventuellement stabilisée.

10 g des supports et des phases catalytiques (C), (G), (H), sont imprégnés par 12 cm3 d'une solution de nitrate de plomb puis traités comme dans l'exemple précédent.

Les surfaces spécifiques reportées sur le tableau II sont celles des phases catalytiques prélevées avant et après traitement du catalyseur en nid d'abeille par du nitrate de plomb et calcination à 1000°C pendant 6 heures.

**TABLEAU II**

Surface spécifique des catalyseurs et des phases catalytiques

| | numéro de l'exemple | référence du catalyseur | catalyseur neuf | catalyseur calciné à 1000°C 6 heures | catalyseur imprégné de 2% de PbO calciné à 1000°C 6 heures | catalyseur imprégné de 16% de PbO calciné à 1000°C 6 heures |
|---|---|---|---|---|---|---|
| A R T | 1 | A | 95 | 49 | 39 | 16 |
| A | 2 | B | 117 | 75 | 45 | 16 |
| N T E R I E U R | 3 | C | 115 | 80 | 43 | 19 |
| | 4 | D | 95 | 70 | 32 | 15 |
| | 5 | E | 119 | 80 | 41 | 17 |
| I N V E N T I O N | 6 | F | 91 | 77 | 75 | 58 |
| | 7 | G | 111 | 98 | 84 | 63 |
| | 8 | H | 101 | 85 | 78 | 57 |
| | 9 | I | 109 | 103 | 95 | 65 |
| | 10 | J | 95 | 75 | 68 | 52 |
| | 11 | K | 105 | 100 | 90 | 61 |

**Exemple 14:** Activités des divers catalyseurs mesurés au banc moteur.

Le présent exemple rassemble les résultats obtenus sur banc moteur avec les catalyseurs (A), (B), (C), (D), (E), (F), (G), (H), (I), (J) et (K) décrits respectivement dans les exemples 1,2,3,4,5,6, 7,8,9,10 et 11.

Les essais ont été effectués en chargeant successivement 1700 cm3 de chacun des catalyseurs sous forme de corps façonnés dans un réacteur de type cylindrique à circulation axiale (diamètre intérieur 18,25 cm, épaisseur du lit de catalyseur 6,5 cm). Les catalyseurs sur monolithes céramique de 1,7 litre ou sur monolithe métallique de 0,8 litre ont été placés dans un réacteur cylindrique approprié.

Le réacteur est adapté sur le circuit d'échappement d'un moteur au banc d'essai en interposant entre le moteur et le réacteur un dispositif permettant de réguler la température des gaz à 530°C en entrée du réacteur.

Le moteur est un moteur d'automobile è essence comprenant 4 cylindres d'une cylindrée totale de 1600 cm3 et dont le rapport volumétrique est de 8,8/1. Il est accouplé à un irein hydraulique et fonctionne en régime stabilisé à 3000 tours/minute en fournissant une puissance d'environ )25 x 3,6 MJ) (25 KW).

D'autre part, pour que la post-combustion catalytique des imbrulés puisse se faire sans difficulté, de l'air secondaire a été introduit dans les gaz d'échappement en amont du réacteur par un dispositif d'aspiration naturelle d'air fonctionnant avec des clapets 'Pulsair'. Le quantité d'additif anti-détonant ajouté au carburant employé pour les essais banc moteur était la suivante:

plomb tétraéthyle : 0,40 g de Pb par litre de carburant

additifs : $C_2H_4Br_2$ : 0,155 gBr/l ; $C_2H_4Cl_2$: 0,136 gCl/l.

Le débit des gaz d'échappement passant sur le catalyseur est dans ces conditions de 46 Nm3/heure et les teneurs initiales des principaux polluants sont les suivantes:

- monoxyde de carbone (CO) : 0,55 % en volume

- hydrocarbures imbrulés (HC) : 0,14 % en volume exprimé en équivalent méthane

Le dosage de ces composés est effectué avant et après passage des gaz d'échappement sur le catalyseur par les techniques analytiques habituelles suivantes:

- CO : absorption infra-rouge (analyseur COSMA Rubis 3000)

- HC : analyse par ionisation de flamme (analyseur IPM)

**TABLEAU III** Taux d'épuration exprimé en pourcentage d'oxyde de carbone (CO) et d'hydrocarbures (HC) mesuré sur banc moteur

| | numéro de l'exemple | référence du catalyseur | Taux d'épuration pour un catalyseur neuf stabilisé 1 heure | | Taux d'épuration après vieillissement du catalyseur sur banc moteur pendant 300 heures | |
|---|---|---|---|---|---|---|
| | | | CO | HC | CO | HC |
| A R T   A N T E R I E U R | 1 | A | 74 | 63 | 55 | 35 |
| | 2 | B | 72 | 65 | 38,5 | 27 |
| | 3 | C | 77 | 61 | 53 | 31 |
| | 4 | D | 97 | 91 | 70 | 58 |
| | 5 | E | 95 | 90 | 65 | 55 |
| I N V E N T I O N | 6 | F | 95 | 92 | 90 | 75 |
| | 7 | G | 96 | 91 | 77 | 70 |
| | 8 | H | 94 | 89 | 75 | 60 |
| | 9 | I | 98 | 93 | 92 | 82 |
| | 10 | J | 92 | 90 | 71 | 66 |
| | 11 | K | 97 | 94 | 91 | 72 |

Les résultats présentés dans les tableaux I à III montrent la supériorité des catalyseurs F à J selon l'invention sur les catalyseurs A à E de l'art antérieur et ces résultats sont d'autant plus significatifs avec une essence fortement chargée en plomb.

**Revendications**

1) Procédé de traitement de gaz d'échappement des moteurs à combustion interne fonctionnant avec un carburant contenant du plomb au moyen d'un catalyseur comportant une phase active déposée sur un support caractérisé en ce que l'on utilise un catalyseur dont le support est constitué d'un oxyde réfractaire auquel est incorporée de la silice et dont la phase active est constituée par du platine et/ou de l'iridium.

2) Procédé selon la revendication 1 caractérisé en ce que le support se trouve sous forme de corps façonnés tels que billes ou extrudés ou sous forme de pellicule appliquée sur un substrat métallique ou en matière céramique, ledit substrat étant sous forme d'une structure inerte et rigide en nids d'abeille.

3) Procédé selon les revendications 1 et 2, caractérisé en ce que le support est constitué d'oxyde réfractaire choisi parmi l'alumine seule ou associée à de l'oxyde de zirconium, des oxydes de terres rares et/ou de l'oxyde de titane.

4) Procédé selon les revendications 1 à 3, caractérisé en ce que le support à base d'oxyde réfractaire présente une surface spécifique comprise entre 25 et 250 m2/g, un volume poreux total compris entre 0,35 et 2,2 cm3/g, une macroporosité telle que le volume des pores dont le diamètre est supérieur à 100 nm (1000 Å) est compris entre 0,05 et 0,9 cm3/g.

5) Procédé selon la revendication 4, caractérisé en ce que le support à base d'alumine présente une surface spécifique comprise entre 70 et 150 m2/g, un volume poreux total compris entre 0,5 et 1,5 cm3/g, une macroporosité telle que le volume des pores dont le diamètre est supérieur à 100 nm (1000 Å) est compris entre 0,2 et 0,5 cm3/g.

6) Procédé selon la revendication 1, caractérisé en ce que la quantité en poids de silice exprimée par rapport à l'oxyde réfractaire incorporée au support est comprise entre 0,05 % et 30 %.

7) Procédé selon la revendication 6, caractérisé en ce que la quantité en poids de silice exprimée par rapport à l'oxyde réfractaire incorporée au support est comprise entre 0,5 et 10 %.

8) Procédé selon les revendications 6 ou 7, caractérisé en ce que la silice est introduite en l'état ou à l'aide d'un précurseur par imprégnation ou au cours de la fabrication du support.

9) Procédé selon la revendication 8, caractérisé en ce que le précurseur de silice est choisi parmi le silicate d'éthyle, l'acide silicique, silicate de sodium, tétraméthylsilane méthyltriéthoxysilane, éthyltriméthoxysilane, triéthylsilicol.

10) Procédé selon la revendication 1, caractérisé en ce que la teneur en métal précieux du groupe constitué par le platine et l'iridium est comprise entre 0,005 et 1 % en poids par rapport à l'ensemble catalytique.

11) Procédé selon la revendication 10, caractérisé en ce que la teneur en métal précieux du groupe constitué par le platine et l'iridium est comprise entre 0,05 et 0,5 %.

12) procédé selon l'une quelconque des revendications 1, 10 et 11, caractérisé en ce que la phase active contient en outre l'un des métaux pris dans le groupe comportant : le calcium, le magnésium, le strontium, le fer, le nickel, le cobalt, le chrome, le vanadium, le molybdène, le tungstène, le cuivre, le zinc, le cérium, le manganèse, le lanthane.

## Patentansprüche

1. Verfahren zur Behandlung von Abgasen aus Verbrennungsmotoren die mit bleihaltigem Treibstoff betrieben werden, mittels eines Katalysators, der eine auf einen Träger abgelagerte aktive Phase enthält, dadurch gekennzeichnet, daß man einen Katalysator verwendet, dessen Träger aus einem hitzebeständigen Oxid besteht, in das Siliziumdioxid eingebaut ist, und dessen aktive Phase aus Platin und/oder Iridium besteht.

2. Verfahren nach Anspruch 1, dadurch gekennzeichnet, daß der Träger sich in Form von Formkörpern wie Kügelchen oder Extrudaten oder in Form eines auf ein metalisches oder Keramisches Substrat aufgebrachten Filmes befindet, wobei das genannte Substrat in Form einer inerten und starren Bienenwabenstruktur vorliegt.

3. Verfahren nach den Ansprüchen 1 und 2, dadurch gekennzeichnet, daß der Träger aus einem hitzebeständigen Oxid besteht, das ausgewählt ist unter Alu miniumoxid allein oder zusammen mit Zirkonoxid, Seltenerdoxiden und/oder Titanoxid.

4. Verfahren nach den Ansprüchen 1 bis 3, dadurch gekennzeichnet, daß der Träger auf Basis des hitzebeständigen Oxids eine spezifische Oberfläche zwischen 25 und 250 m2/g, ein Gesamtporenvolumen zwischen 0,35 und 2,2 cm3/g und eine derartige Makroporosiät besitzt, daß das Volumen der Poren, deren Durchmesser über 100 nm liegt, zwischen 0,05 und 0,9 cm3/g beträgt.

5. Verfahren nach Anspruch 4, dadurch gekennzeichnet, daß der Träger auf Basis von Aluminiumoxid eine spezifische Oberfläche zwischen 70 und 150 m2/g ein Gesamtporenvolumen zwischen 0,5 und 1,5 cm3/g und eine derartige Makroporosität besitzt, daß das Volumen der Poren, deren Durchmesser über 100 nm liegt, zwischen 0,2 und 0,5 cm3/g beträgt.

6. Verfahren narch Anspruch 1, dadurch gekennzeichnet, dass die Gewichtsmenge an dem in den Träger eingebauten Siliziumdioxid zwischen 0,05% und 30%, bezogen auf das hitzbeständige Oxid,liegt.

7. Verfahren nach Anspruch 1, dadurch gekennzeichnet , dass die Gewichtsmenge an dem in den Träger eingebauten Siliziumdioxid zwischen 0,5% und 10% bezogen auf das hitzebeständige Oxide, liegt.

8. Verfahren nach einem der Ansprüche 6 oder 7, dadurch gekennzeichnet, daß das Siliziumdioxid direkt oder mit Hilfe eines Vorläufers durch Imprägnierung oder im Verlaufe der Herstellung des Trägers eingebracht wird.

9. Verfahren nach Anspruch 8, dadurch gekennzeichnet, daß der Vorläufer des Siliziumdioxids unter Ethylsilikat, Kieselsäure, Natriumsilikat, Tetramethylsilan, Methyltriethoxysilan, Ethyltrimethoxysilan und Triethylsilikol ausgewählt ist.

10. Verfahren nach Anspruch 1 dadurch gekennzeischnet, daß der Gehalt an Edelmetall aus der von Platin und Iridium gebildeten Gruppe zwischen 0,005 und 1 Gewichtsprozent, bezogen auf den Gesamtkatalysator, liegt.

11. Verfahren nach Anspruch 10, dadurch gekennzeichnet, daß der Gehalt an Edelmetall aus der durch das Platin und das Iridium gebildeten Gruppe zwischen 0,05 und 0,5 % liegt.

12. Verfahren nach einem der Ansprüche 1, 10 oder 11, dadurch gekennzeichnet, daß die aktive Phase außerdem eines der Metalle aus der Gruppe enthält, die umfaßt: Kalzium, Magnesium, Strontium, Eisen, Nickel, Kobalt, Chrom, Vanadium, Molybdän, Wolfram, Kupfer, Zink, Cer, Mangan und Lanthan.

## Claims

1. Process for the treatment of the exhaust gas from internal combustion engines operating on a fuel containing lead, by means of a catalyst including an active phase deposited on a support, characterised in that use is made of a catalyst the support of which consists of a refractory oxide in which silica is incorporated and in which the active phase consists of platinum and/or iridium.

2. Process according to Claim 1, characterised in that the support is in the form of shaped bodies such as beads or extrudates or in the form of a film applied to a metallic or ceramic substrate, the said substrate being in the form of an inert, rigid, beehive-shaped structure.

3. Process according to Claims 1 and 2, characterised in that the support consists of a refractory oxide chosen from alumina alone or associated with zirconium oxide, rare earth oxides and/or titanium oxide.

4. Process according to Claims 1 to 3, characterised in that the support based on a refractory oxide has a specific surface of between 25 and 250 $m^2/g$, a total pore volume of between 0.35 and 2.2 $cm^3/g$, and a macroporosity such that the volume of the pores with a diameter greater than 100 nm (1000 Å) is between 0.05 and 0.9 $cm^3/g$.

5. Process according to Claim 4, characterised in that the support based on alumina has a specific surface of between 70 and 150 $m^2/g$ a total pore volume of between 0.5 and 1.5 $cm^3/g$, and a macroporosity such that the volume of the pores with a diameter greater than 100 nm (1000 Å) is between 0.2 and 0.5 $cm^3/g$.

6. Process according to Claim 1, characterisedin that the quantity of silica by weight, expressed relative to the refractory oxide and incorporated in the support is between 0.05% and 30%.

7. Process according to Claim 6, characterised in that the quantity of silica by weight, expressed relative to the refractory oxide and incorporated in the support is between 0.5 and 10%.

8. Process according to Claims 6 or 7, characterised in that the silica is introduced as such or with the aid of a precursor by impregnation or during the manufacture of the support.

9. Process according to Claim 8, characterised in that the silica precursor is chosen from ethyl silicate, silicic acid, sodium silicate, tetramethylsilane, methyltriethoxysilane, ethyltrimethoxysilane or triethylsilicol.

10. Process according to Claim 1, characterised in that the content of precious metal from the group consisting of platinum and iridium is between 0.005 and 1% by weight relative to the catalyst system.

11. Process according to Claim 10, characterised in that the content of precious metal from the group consisting of platinum and iridium is between 0.05 and 0.5%.

12. Process according to any one of Claims 1, 10 and 11, characterised in that the active phase additionally contains one of the metals taken from the group comprising calcium, magnesium, strontium, iron, nickel, cobalt, chromium, vanadium, molybdenum, tungsten, copper, zinc, cerium, manganese and lanthanum.